## Europäisches Patentamt
## European Patent Office
## Office européen des brevets

(11) Numéro de publication: **0 073 720**
**B1**

(12) # FASCICULE DE BREVET EUROPEEN

(45) Date de publication du fascicule du brevet:
**17.04.85**

(51) Int. Cl.⁴: **H 04 Q 1/457**

(21) Numéro de dépôt: **82401587.9**

(22) Date de dépôt: **26.08.82**

(54) Dispositif de génération numérique de fréquence.

(30) Priorité: **28.08.81 FR 8116441**

(43) Date de publication de la demande:
**09.03.83 Bulletin 83/10**

(45) Mention de la délivrance du brevet:
**17.04.85 Bulletin 85/16**

(84) Etats contractants désignés:
**BE DE FR GB IT NL**

(56) Documents cités:
**US - A - 3 985 966**

**ELECTRONICS AND COMMUNICATIONS IN JAPAN, vol. 61-B, no. 12, 1978, pages 76-83, Washington D.C., USA**
**COMMUTATION ET ELECTRONIQUE, no. 59, d'Octobre 1977, pages 99 à 115**

(73) Titulaire: **SOCIETE ANONYME DE TELECOMMUNICATIONS, 40 avenue de New York, F-75116 Paris (FR)**

(72) Inventeur: **Kerdoncuff, Guy Pierre, Allée des Hortensias, F-22700 Perros-Guirec (Côtes du Nord) (FR)**
Inventeur: **Provendier, Jacques Henri, La Hulotte Tal an Ilis, F-22300 Lannion (Côtes du Nord) (FR)**

(74) Mandataire: **Bloch, Robert et al, 39 avenue de Friedland, F-75008 Paris (FR)**

BUNDESDRUCKEREI BERLIN

# 0 073 720

## Description

La présente invention se rapporte à la génération de fréquences de type numérique en particulier pour la génération de tonalités, la signalisation intercentraux, les tests de matériels.

De telles fréquences sont utilisées en particulier pour l'émission de signaux multifréquences, de tonalités, etc.

Les tonalités résultent de fréquences par cadencement, tandis que les signaux multifréquences, par exemple ceux conformes aux codes »MF SOCOTEL, $R_2$ ou clavier«, résultent de la combinaison de diverses fréquences.

Le signal à engendrer est un signal de forme générale

$$E = \sin 2 \pi \, ft.$$

Dans les systèmes MIC (modulation par impulsions codées), tout signal caractérisé par une fréquence f est représenté par une suite d'échantillons $x_p$. Chaque échantillon $x_p$ s'écrit:

$$x_p = \sin 2 \pi \, fpT = \sin 2 \pi \, NT,$$

où p est le rang de l'échantillon et T, égal à $\dfrac{1}{F}$, la période d'échantillonage. On choisit de préférence, dans les systèmes MIC, $1/T = 8000$ Hz, ce qui limite f à 4000 Hz, d'après le théorème de Shannon.

Un dispositif générateur de signaux multifréquences a déjà été décrit dans la revue Commutation et Electronique n° 59, d'Octobre 1977, pages 99 à 115. Ce générateur vise à utiliser la périodicité de la fonction sinus sur l'intervalle $(0,2\,\pi)$, en considérant, sur cet intervalle, M valeurs sin $\alpha$, avec a $= \dfrac{2 \pi i}{M}$.

Ces M valeurs sont numérotées et inscrites dans une table, ou mémoire morte. Ceci permet de ne mettre en mémoire que $M' = \dfrac{M}{4}$ valeurs correspondant à l'intervale $\left(0, \dfrac{\pi}{2}\right)$. Si on lit à la fréquence F les échantillons de la mémoire, on obtient une suite d'échantillons représentatifs d'une sinusoïde de fréquence $\dfrac{F}{M}$.

Une lecture de la même mémoire, mais en ne retenant qu'une valeur toutes les k valeurs, k étant un nombre réel compris entre o et $\dfrac{M}{2}$, fournit une suite d'échantillons représentatifs d'une sinusoïde de fréquence $f = \dfrac{kF}{M}$.

Toutefois, lorsque k est un nombre fractionnaire, on ne prend en compte pour la lecture que la partie entière du nombre.

En d'autres termes, on ne lit donc pas toujours ce qu'on devait lire, si bien qu'on introduit une erreur de lecture, ou une distorsion. Un tel procédé de lecture occasionne une mauvaise définition de la séquence d'échantillons devant représenter la fréquence recherchée.

La présente invention vise à pallier cet inconvénient.

Ainsi, la présente invention concerne un générateur numérique de fréquence destiné à délivrer un signal comprenant au moins une composante du type

$$E = \sin 2 \pi \, ft,$$

sous forme d'une suite d'échantillons

$$x_p = \sin 2 \pi \, fpT$$

de rang p inscrits dans des moyens de mémoire, caractérisé par le fait que les moyens de mémoire comprennent une mémoire morte, contenant n valeurs différentes 1, 2, ... n prises par la fonction sin $2 \pi$ t à n instants successifs

$$t_1 = \frac{1}{F}, t_2 = \frac{2}{F}, \ldots t_n = \frac{n}{F}, F = \frac{1}{T}$$

étant la fréquence d'échantillonage, une mémoire vive pour stocker chaque échantillon sous forme d'un triplet (P, Q, S), P étant le nombre définissant la valeur absolue sin $2 \pi$ PT de l'échantillon de rang p, Q et S définissant le quadrant du cercle trigonométrique contenant l'échantillon, l'échantillon de rang p du signal à engendrer étant obtenu de façon biunivoque à partir de l'échantillon de rang pf de la fonction sin $2 \pi$ t contenu dans la mémoire morte et les échantillons de la mémoire morte étant adressés par les nombres P de la mémoire vive, le générateur comprenant en outre des moyens agencés pour déduire d'un triplet (P, Q, S), représentatif de l'échantillon de l'instant pT, le triplet (P', Q', S') représentatif de l'échantillon de l'instant (p + 1)T.

2

Grâce à l'invention, il est donc suffisant d'inscrire dans la table les valeurs d'une fonction sinus de fréquence égale à 1 Hz. En outre, la fréquence d'échantillonnage F étant une constante du générateur de l'invention, l'échantillonnage du signal à fréquence entière à engendrer s'effectue de façon biunivoque à partir des seuls échantillons en nombre prédéterminé inscrits dans la table, donc sans distorsion, seul subsistant le bruit inévitable de quantification inhérent à l'échantillonnage.

Dans une mise en oeuvre préférée du générateur de l'invention, on inscrit dans la table n valeurs de la fonction sin $2\pi t$, tel que $n = \dfrac{F}{4}$.

Ainsi, on inscrira dans la table $\dfrac{F}{4}$, soit 2000, échantillons.

D'autres caractéristiques et avantages apparaîtront à la lecture de la description suivante d'une forme de réalisation préférée du générateur de l'invention, illustrée sur les dessins annexés, sur lesquels:

La figure 1 est une illustration des propriétés de la fonction sinus, dans l'intervalle $(0, 2\pi)$.

La figure 2 représente le bloc-diagramme du dispositif de génération de l'invention.

La figure 3 représente l'organigramme de calcul du triplet (P', Q', S') à partir du triplet (P, Q, S).

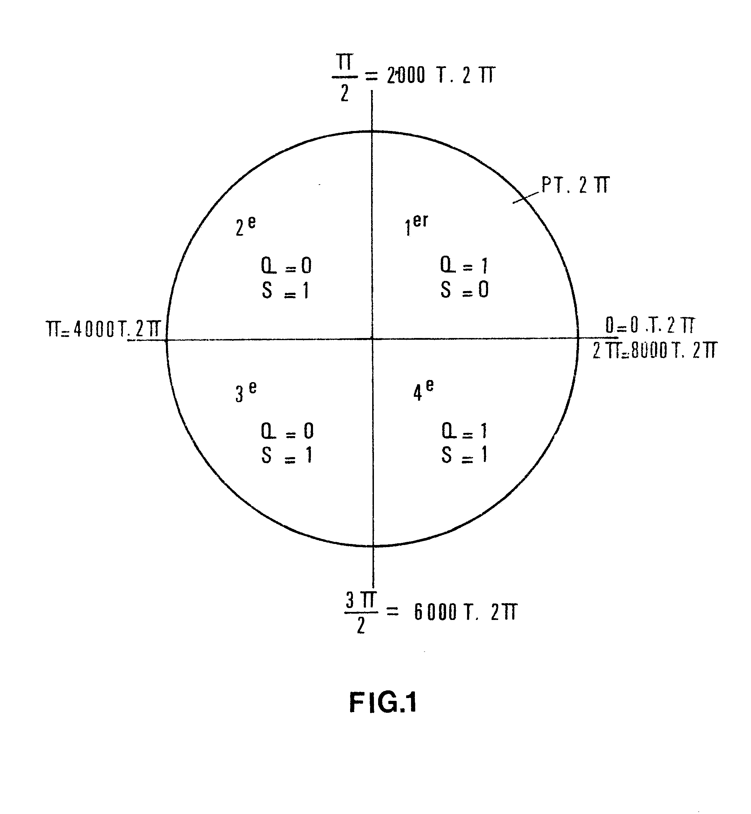

En se référant à la figure 1 du cercle trigonométrique, on peut représenter dans les quatres quadrants du cercle les propriétés de la fonction sinus.

A chaque quadrant on associe un nombre K, tel que $0 \leq K \leq 3$. Les échantillons $Y_N$ associés à chacun des quadrants sont tels que l'échantillon de rang $N + 8000\, q$ est identique à cet échantillon $Y_N$.

$$Y(N + 8000\, q) = Y_N$$

On peut aisément faire correspondre à tout échantillon de rang N un autre échantillon de rang P.

Si F est la fréquence d'échantillonnage, prise en l'occurence égale à 8000 Hz, T la période d'échantillonnage, à l'intervalle $(0-2\pi)$ du cercle trigonométrique correspondent 8000 échantillons de rang NT, espacés deux à deux de $2\pi T$:

à 0, correspond $0 \times T \times 2\pi$,

à $\dfrac{\pi}{2}$, correspond $2000 \times T \times 2\pi$,

à $\pi$, correspond $4000 \times T \times 2\pi$,

à $\dfrac{3\pi}{2}$, correspond $6000 \times T \times 2\pi$,

à $2\pi$, correspond $8000 \times T \times 2\pi$.

Dans le premier quadrant $\left(0, \dfrac{\pi}{2}\right)$ on a donc

$$0 \leq N \leq 2000,$$

dans le deuxieme quadrant $\left(\dfrac{\pi}{2}, \pi\right)$ on a donc

$$2000 \leq N \leq 4000,$$

dans le troisième quadrant $\left(\pi, \dfrac{3\pi}{2}\right)$ on a donc

$$4000 \leq N \leq 6000,$$

et dans le quatrième quadrant $\left(\dfrac{3\pi}{2}, 2\pi\right)$ on a donc

$$6000 \leq N \leq 8000.$$

Dans le premier quadrant $\left(0, \dfrac{\pi}{2}\right)$ on prend K = 0, et on peut poser

$$Y_N = \sin 2\pi NT$$
$$= \sin 2\pi PT,$$
donc $\quad P = N$, et $0 \leq P \leq 2000$.

3

Dans le deuxième quadrant $\left(\dfrac{\pi}{2}, \pi\right)$ on prend K = 1, et on peut poser

$$Y_N = \sin 2\,\pi\,NT$$
$$= \sin (\pi - 2\,\pi\,NT)$$
$$= \sin (4000\,T\,2\,\pi - 2\,\pi\,NT)$$
$$= \sin 2\,\pi\,(4000 - N)\,T$$

donc $\quad P = 4000 - N$

Comme $2000 \le N \le 4000$, on a
$$0 \le P \le 2000.$$

Dans le troisième quadrant $\left(\pi\,\dfrac{3\,\pi}{2}\right)$, on prend K = 2 et on peut poser

$$Y_N = \sin 2\,\pi\,NT$$
$$= -\sin (2\,\pi\,NT - \pi)$$
$$= -\sin (2\,\pi\,NT - 4000\,T\,2\,\pi)$$
$$= -\sin 2\,\pi\,(N - 4000)\,T$$
$$= -\sin 2\,\pi\,PT.$$

donc $\quad P = N - 4000$

Comme $4000 \le N \le 6000$
$$\left\{ \begin{array}{l} 0 \le P \le 2000 \\ |Y_N| = \sin 2\,\pi\,PT \end{array} \right.$$

Dans le quatrième quadrant $\left(\dfrac{3\,\pi}{2}, 2\,\pi\right)$, on prend K = 3 et on peut poser

$$Y_N = \sin 2\,\pi\,NT$$
$$Y_N = \sin 2\,\pi\,NT$$
$$= -\sin (2\,\pi - 2\,\pi\,NT)$$
$$= -\sin (8000\,T\,2\,\pi - 2\,\pi\,NT)$$
$$= -\sin 2\,\pi\,(8000 - N)\,T$$
$$= -\sin 2\,\pi\,PT$$

donc $\quad P = 8000 - N$

Comme $6000 \le N \le 8000$
$$\left\{ \begin{array}{l} 0 \le P \le 2000 \\ |Y_N| = \sin 2\,\pi\,PT \end{array} \right.$$

Ainsi tout échantillon $Y_N$ peut être caractérisé par le quadrant auquel il appartient, quadrant défini par un nombre K ($0 \le K \le 3$), par un nombre P permettant de déterminer la valeur absolue de l'échantillon, et par son signe, tel que:

$$|Y_N| = \sin 2\,\pi\,PT$$

avec $0 \le P \le 2000$.

On convient donc de coder toute fréquence f comprise, dans l'espèce, entre 1 Hz et 4000 Hz, par trois paramètres S, Q, P, où S représente le signe de l'échantillon mis en mémoire, Q sa parité et P le nombre définissant sa valeur absolue $\sin 2\,\pi\,PT$.

Les paramètres (P, Q, S) constituent la définition dynamique de l'échantillon $Y_N$. A tout nouvel échantillon à engendrer correspond un autre triplet (P', Q', S'). Un algorithme de calcul permet de définir le nouveau triplet (P', Q', S') à partir de la fréquence f à engendrer et de l'état précédent (P, Q, S) ainsi qu'il sera explicité ultérieurement.

A l'échantillon de rang n du signal à engendrer

$$E = A_m \sin 2\,\pi\,ft,$$

on peut associer l'échantillon $Y_N$ défini par le triplet (P, Q, S) tel que $E_n = A_m Y_N$, où $A_m$ est l'amplitude maximale exploitable par le système, choisie de façon appropriée:

$$|E_n| = A_m \sin 2\,\pi\,PT,$$

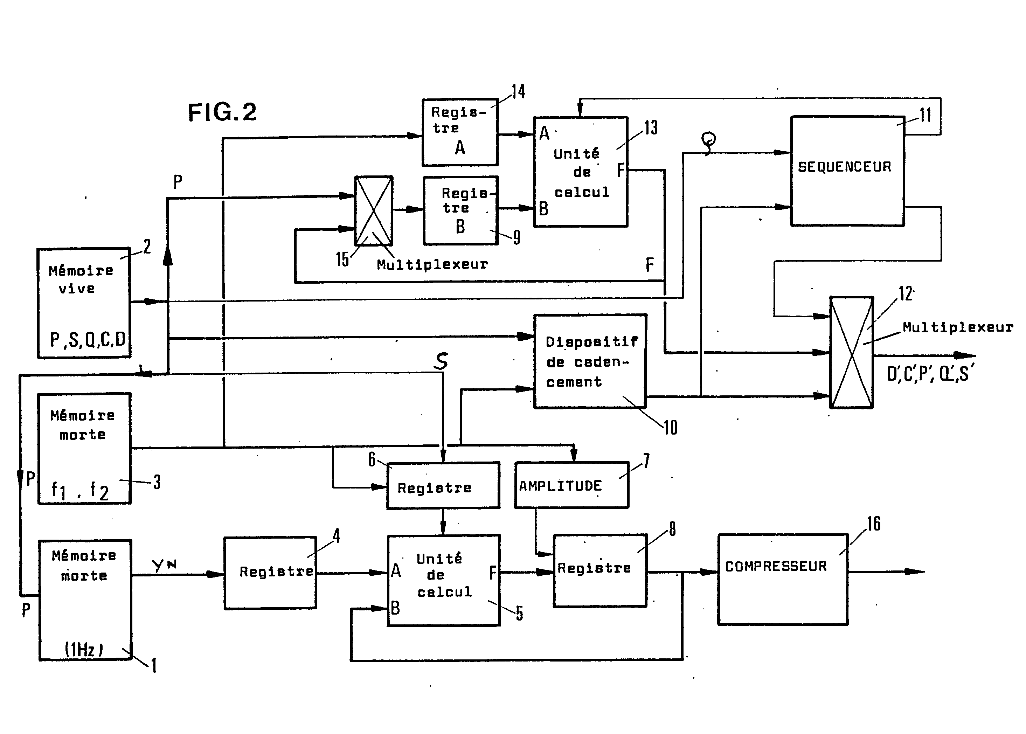

La figure 2 représente la forme de réalisation préférée du générateur de tonalité mettant en oeuvre le procédé de l'invention.

Les échantillons de la fréquence 1 Hz sont mis dans une mémoire 1 de capacité 1/4T. On met alors 2000 échantillons en mémoire puisque la fréquence d'échantillonnage est égale à 8 kHz.

Dans la pratique on choisit avantageusement 2048 mots comme dimension de mémoire ce qui simplifie l'algorithme de calcul du nouveau triplet (P', Q', S').

Le procédé de génération de fréquences selon l'invention permet en particulier de produire des tonalités. Il est bien connu qu'une tonalité TON s'exprime en fonction du temps comme une somme de signaux de fréquences $f_1$ et $f_2$

$$TON = [A_1 \sin 2 \pi f_1 t + A_2 \sin 2 \pi f_2 t] \cdot h(t),$$

où $A_1$ et $A_2$ sont les amplitudes respectives des composantes de fréquences $f_1$ et $f_2$ et $h(t)$ est une fonction de période $(t_1 + t_2)$ telle que

$$h(t) = 1 \text{ sur l'intervalle } 0, t_1$$

$$h(t) = 0 \text{ sur l'intervalle } t_1, t_1 + t_2$$

$t_2$ pouvant être nul. Cette fonction $h(t)$ correspond au cadencement de certaines tonalités téléphoniques.

De la même façon que pour une fréquence simple, à chaque fréquence $f_1$ ou $f_2$ correspond un triplet de paramètres dynamiques $(P_1, Q_1, S_1)$ ou $(P_2, Q_2, S_2)$ qui sont mis dans une mémoire vive 2.

Les divers paramètres $A_1, A_2, f_1, f_2, t_1, t_2$ sont stockés dans une mémoire morte 3. Ainsi deux nouveaux paramètres dynamiques D et C sont associés au signal dans le cas d'une tonalité, D représentant l'état émission ou l'état bloqué, et C représentant la valeur courante d'un compteur mesurant la durée d'émission $(t_1)$ ou de non émission $(t_2)$.

Le dispositif de la figure 2 comporte essentiellement trois mémoires, une mémoire morte 1 pour les échantillons de la sinusoïde $\sin 2 \pi t$, de fréquence 1 Hz, une mémoire vive 2 pour les paramètres P, Q, S, C, D de chaque fréquence formant la tonalité, et enfin une mémoire morte 3 pour les caractéristique $A_1$, $A_2, f_1, f_2, t_1, t_2$ de la même tonalité ou de la fréquence f à engendrer. La mémoire 2 fournit à l'entrée de la mémoire 1 une adresse représentative du rang P de l'échantillon $Y_N$.

Cet échantillon $Y_N$ issu de la mémoire 1 est appliqué dans un registre 4 qui lui-même le fournit à l'entrée d'une unité de calcul 5. Un registre 6 reçoit le signe S des échantillons ainsi que les caractéristiques des tonalités permettant de définir le type d'opération (fréquence pure ou code bifréquence) à effectuer. Ce résultat, appliqué à l'entrée de l'unité de calcul 5, définit l'opération, addition ou soustraction, effectuée par cette unité 5. Les données de la mémoire 1, les échantillons de la sinusoïde à 1 Hz, sont adressées par le rang P des échantillons fourni par la mémoire 2. Cet échantillon $Y_N$ issu de la mémoire 1 est appliqué à l'entrée du registre 4 des échantillons avant d'être appliqué à l'entrée de l'unité de calcul 5. Cet échantillon RECH contenu dans le registre 4 doit en effet subir un nombre de décalages et d'additions équivalent à une multiplication.

Le paramètre dynamique P issu de la mémoire 2 est également appliqué à l'entrée d'un registre 9 mémorisant le rang P de l'échantillon précédent. Le paramètre Q, quant à lui, est applique à l'entrée d'un dispositif 11 de définition de la séquence d'opérations. C'est de paramètre Q qui déclenche le déroulement de l'algorithme, qui sera explicité en détail ultérieurement: le dispositif 11 fournit en sortie une indication d'opération destinée à une unité de calcul 13.

Un dispositif de cadencement 10 reçoit également à son entrée la caractéristique de largeur du creux ou du plein, correspondant à la fréquence f ou aux fréquences $f_1, f_2$ de la tonalité concernée, issue de la mémoire morte 3. En sortie du dispositif de cadencement 10, la caractérestique de creux ou de plein est appliquée, d'une part, à l'entrée d'un multiplexeur 12, d'autre part, à l'entrée du dispositif 11 de définition de la séquence d'opérations.

La sortie du multiplexeurs 12 correspond à l'entrée de la mémoire vive 2 où sont consignés les états dynamiques P, Q, S, C, D des signaux à produire.

Ainsi qu'il a déjà été mentionné, tout échantillon est engendré à partir de l'état précédent. L'algorithme de calcul permet de définir les nouveaux paramètres P', Q', S', C', D' à partir des anciens P, Q, S, C, D. Cet algorithme est réalisé au moyen de divers registres.

Le rang de l'échantillon précédent introduit dans le registre 9 est appliqué à l'entrée d'une unité de calcul 13 qui effectue l'opération définie par le dispositif 11. L'unité 13 reçoit également la caractéristique de fréquence issue de la mémoire morte 3 après mémorisation dans un registre 14. En sortie, l'unité de calcul 13 fournit un résultat intermédiaire qui est appliqué à l'entrée d'un multiplexeur 15 qui multiplexe ce résultat avec le rang P de l'échantillon précédent issu de la mémoire 2. Le registre 9 mémorise ainsi non pas exactement le rang P de l'échantillon précédent issu de la mémoire 2 mais le résultat du multiplexage issu du multiplexeurs 15, multiplexage lié au déroulement de l'algorithme de calcul.

Le résultat élaboré par l'unité de calcul 13 qui est le rang P' du nouvel échantillon est également appliqué à l'entrée du multiplexeurs 12.

Les paramètres Q' et S', respectivement de quadrants et de signes des échantillons, sont fournis en sortie du dispositif 11 de définition de la séquence d'opérations.

Ainsi, le multiplexeur 12 reçoit le nouveau paramètre P' issu de l'unité 13, les paramètres Q' et S' issus

0 073 720

du dispositif 11 ainsi que les paramètres C' et D' issus du dispositif 10. Tous ces nouveaux paramètres sont appliqués à l'entrée de la mémoire vive 2. En sortie de la mémoire 2, le signe S est également appliqué à l'entrée du registre 6 de définition des opérations.

Un dispositiv 7 de traitement des amplitudes reçoit en entrée les caractéristiques de fréquence issues de la mémoire 3 et corrige le résultat stocké dans un registre 8 contenant le résultat de calcul fourni par l'unité de calcul 5. Les résultats intermédiaires fournis par ce registre 8 sont réintroduits à l'entrée de l'unité de calcul 5 jusqu'à la fin des opérations définies par le dispositif 6, réalisant de ce fait, par une suite de décalages et d'additions, des multiplications.

Le résultat final subit encore une compression de linéaire à logarithme au moyen d'un dispositif 16, avant d'être émis en sortie en code MIC conformément aux spécifications inhérentes à ce code.

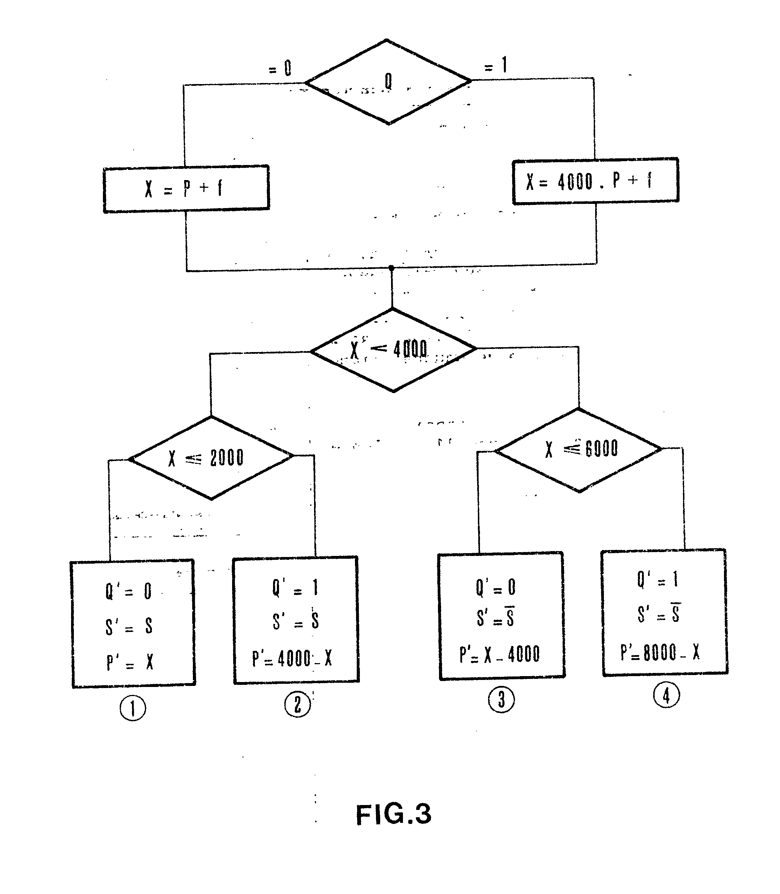

En se référant à la figure 3, le calcul permettant de déduire tout échantillon $Y_N$ connaissant l'échantillon précédent $Y_{N'}$ représenté par le couple (K, P) K étant le quadrant et P le rang, est illustré par un organigramme.

Le nouvel échantillon $Y_{N'}$ est défini par le couple (K', P'). Au niveau des données de la table, le rang N' du nouvel échantillon est distant de la quantité f du rang N de l'échantillon précédent, selon la formule

$$N' = N + F$$

car:  $N = nf$
$N' = (n + 1) f$
$= nf + f$
$= N + f$

Nous avons vu précédemment que $1 \geq f < 4000$. Nous allons étudier les 4 possibilités différenciées pour la valeur de K associée à l'échantillon $Y_N$.

Ainsi lorsque K = 0, $Y_N$ est dans le 1er quadrant, nous avons N = P donc $N' = N + f = P + f$.

Cas a    $0 \leq P + f \leq 2000$

$Y_{N'}$ est dans le 1er quadrant,
donc $\begin{cases} K' = 0, P' = P + f \\ \text{et } \sin 2\,\pi\,N'T = \sin 2\,\pi\,P'T \end{cases}$

Cas b    $2000 < P + f < 4000$

$Y_{N'}$ est dans le 2ème quadrant
$N' = 4000 - P' = P + f$
donc $\begin{cases} K' = 1, P' = 4000 - (P + f) \\ \text{et } \sin 2\,\pi\,N'T = \sin 2\,\pi\,P'T \end{cases}$

Cas c    $4000 \leq P + f < 6000$

$Y_{N'}$ est dans le 3ème quadrant
$N' = 4000 + P' = P + f$
donc $\begin{cases} K' = 2, P' = (P + f) - 4000 \\ \text{et } \sin 2\,\pi\,N'T = - \sin 2\,\pi\,P'T \end{cases}$

Lorsque K = 1 $Y_N$ est dans le 2ème quadrant. Nous avons

$N = 4000 - P$
$N' = N + f = 4000 - P + f$

Cas a    $2000 < 4000 - P + f < 4000$

$Y_{N'}$ est dans le 2ème quadrant
$N' = 4000 - P' = 4000 - P + f$
donc $\begin{cases} K' = 1, P' = P - f \\ \sin 2\,\pi\,N'T = \sin 2\,\pi\,P'T \end{cases}$

Cas b    $4000 \leq 4000 - P + f \leq 6000$

$Y_{N'}$ est dans le 3ème quadrant
$N' = 4000 + P' = 4000 - P + f$
donc $\begin{cases} K' = 2, P' = f - P \\ \sin 2\,\pi\,N'T = - \sin 2\,\pi\,P'T \end{cases}$

6

Cas c    $6000 < 4000 - P + f < 8000$

$Y_{N'}$ est dans le 4ème quadrant
$N' = 8000 - P' = 4000 - P + f$
donc $\begin{cases} K' = 3, P' = 4000 + P - f \\ \sin 2\pi N'T = -\sin 2\pi P'T \end{cases}$

Puis lorsque $K = 2$, $Y_N$ est dans le 3ème quadrant. Nous avons:

$N = 4000 + P$
$N' = N + f = 4000 + P + f$

Cas a    $4000 \leq 4000 + P + f \leq 6000$

$Y_{N'}$ est dans le 3ème quadrant
$N' = 4000 + P' = 4000 + P + f$
donc $\begin{cases} K' = 2, P' = P + f \\ \sin 2\pi N'T = -\sin 2\pi P'T \end{cases}$

Cas b    $6000 < 4000 + P + f < 8000$

$Y_{N'}$ est dans le 4ème quadrant
$N' = 8000 - P' = 4000 + P + f$
donc $\begin{cases} K' = 3, P' = 4000 - (P + f) \\ \sin 2\pi N'T = -\sin 2\pi P'T \end{cases}$

Cas c    $8000 \leq 4000 + P + f \leq 2000 + 8000$

$Y_{N'}$ est dans le 1er quadrant
$N' = P' + k\,8000$ avec $k = 1$
$N' = P' + 8000 = 4000 + P + f$
donc $\begin{cases} K' = 0, P' = P + f - 4000 \\ \sin 2\pi N'T = \sin 2\pi P'T \end{cases}$

Pour $K = 3$, $Y_N$ est dans le 4ème quadrant. Nous avons:

$N = 8000 - P$
$N' = N + f = 8000 - P + f$

Cas a    $6000 < 8000 - P + f < 8000$

$Y_{N'}$ est dans le 4ème quadrant
$N' = 8000 - P' = 8000 - P + f$
donc $\begin{cases} K' = 3, P' = P - f \\ \sin 2\pi N'T = -\sin 2\pi P'T \end{cases}$

Cas b    $8000 \leq 8000 - P + f \leq 2000 + 8000$

$Y_{N'}$ est dans le premier quadrant
$N' = P' + 8000$ avec $k = 1$
$N' = P' + 8000 = 8000 - P + f$
donc $\begin{cases} K' = 0, P' = f - P \\ \sin 2\pi N'T = \sin 2\pi P'T \end{cases}$

Cas c    $2000 + 8000 < 8000 - P + f < 4000 + 8000$

$Y_{N'}$ est dans le 2ème quadrant
$N' = 4000 - P' + 8000$ avec $k = 1$
$N' = 4000 - P' + 8000 = 8000 - P + f$
donc $\begin{cases} K' = 1, P' = 4000 + P - f \\ \sin 2\pi N'T = \sin 2\pi P'T \end{cases}$

Nous pouvons déduire des cas exposés plus haut que,

— pour $K = 0$ et $K = 2$
le passage du couple $(K, P)$ au couple $(K', P')$ suit la même loi, soit

   — cas a: $K' = K,$     $P' = P + f$
   — cas b: $K' = K + 1, P' = 4000 - (P + f)$
   — cas c: $K' = K + 2, P' = (P + f) - 4000$

— pour $K = 1$ et $K = 3$
le passage du couple $(K, P)$ au couple $(K', P')$ suit la même loi, soit

   — cas a: $K' = K,$     $P' = P - f$
   — cas b: $K' = K + 1, P' = f - P$
   — cas c: $K' = K + 2, P' = 4000 + P - f$

— pour $K' = 0$ et $K' = 1$
L'échantillon $Y_{N'}$ est positif

— pour $K' = 2$ et $K' = 3$
L'échantillon $Y_{N'}$ est négatif.

Ces constatations nous amènent à coder $K$ de la façon suivante:

| K | S | Q |
|---|---|---|
| 0 | 0 | 0 |
| 1 | 0 | 1 |
| 2 | 1 | 0 |
| 3 | 1 | 1 |

$S$ représente le signe de l'échantillon associé au couple $(K, P)$ à savoir $S = 0$ pour un échantillon positif, $S = 1$ pour un échantillon négatif, $Q$, élement binaire de parité de $K$, définit les opérations donnant le couple $(K', P')$.

La figure 3 résume l'organigramme permettant de déduire chaque triplet $(P', Q', S')$ du triplet précédent $(P, Q, S)$.

La relation entre l'organigramme de la figure 3 et les cas ci-dessus est établie dans le tableau ci-après.

| | | |
|---|---|---|
| ①: | K pair (0,2) | cas a |
| ②: | K pair | cas b |
| | K impair (1,3) | cas a |
| ③: | K pair | cas c |
| | K impair | cas b |
| ④: | K impair | cas c |

## Revendication

Générateur numérique de fréquence destiné à délivrer un signal comprenant au moins une composante du type

$$E = \sin 2\pi ft,$$

sous forme d'une suite d'échantillons

$$x_p = \sin 2\pi fpT$$

de rang p inscrits dans des moyens de mémoire, caractérisé par le fait que les moyens de mémoire comprennent une mémoire morte (1), contenant n valeurs différentes 1, 2, ... n prises par la fonction $\sin 2\pi t$ à n instants successifs

$$t_1 = \frac{1}{F}, \, t_2 = \frac{2}{F}, \, \ldots t_n = \frac{n}{F}, \, F = \frac{1}{T}$$

étant la fréquence d'échantillonage, une mémoire vive (2) pour stocker chaque échantillon sous forme d'un triplet P, Q, S, P étant le nombre définissant la valeur absolue sin 2 $\pi$ PT de l'échantillon de rang p, Q et S définissant le quadrant du cercle trigonométrique contenant l'échantillon, l'échantillon de rang p du signal à engendrer étant obtenu de façon biunivoque à partir de l'échantillon de rang pf de la fonction sin 2 $\pi$ t contenu dans la mémoire morte (1) et les échantillons de la mémoire morte (1) étant adressés par les nombres P de la mémoire vive (2), le générateur comprenant en outre des moyens (9, 11–15) agencés pour déduire d'un triplet P, Q, S, représentatif de l'échantillon de l'instant pT, le triplet P', Q', S' représentatif de l'échantillon de l'instant (p + 1) T.

## Patentanspruch

Numerischer Frequenzgenerator für die Lieferung eines Signals, das mindestens eine Komponente vom Typ
$$E = \sin 2 \, \pi \, ft,$$

in Form einer Folge von Abtastwerten

$$x_p = \sin 2 \, \pi \, fpT$$

mit dem Rang p enthält, die in eine Speichereinrichtung eingegeben sind, dadurch gekennzeichnet, daß die Speichereinrichtung einen Totspeicher (1), der n verschiedene Werte 1, 2, . . . n umfaßt, die zu aufeinanderfolgenden Zeitpunkten

$$t_1 = \frac{1}{F}, \, t_2 = \frac{2}{F}, \, \ldots t_n = \frac{n}{F}, \, F = \frac{1}{T}$$

als Abtastfrequenz von der Funktion sin 2 $\pi$ t abgeleitet sind, und einen Lese-Schreib-Speicher (Lebend-Speicher) (2) zum Einspeichern jedes Abtastwertes in Form eines Tripletts P, Q, S aufweist, wobei P die Zahl ist, die den Absolutwert sin $\pi$ PT des Abtastwertes vom Rang p definiert, während Q und S den trigonometrischen Kreisquadranten, der den Abtastwert enthält definiert, wobei der Abtastwert vom Rang p des zu erzeugenden Signals in bi-eindeutiger Weise von dem Abtastwert mit den Rang pf der in den Totspeicher (1) enthaltenen Funktion sin 2 $\pi$ t erhalten worden ist, und wobei die Abtastwerte des Totspeichers durch die Zahlen P des Lese-Schreib-Speichers (2) adressiert werden, und daß der Generator außerdem Mittel (9, 11–15) umfaßt, die in der Lage sind, vom einem Triplett P, Q, S, das für den Abtastwert zum Zeitpunkt pT repräsentativ ist, das Triplett P', Q', S' abzuleiten, das für den Abtastwert zum Zeitpunkt (p + 1) T repräsentativ ist.

## Claim

Digital frequency generator adapted to deliver a signal comprising at least one component of the type represented by

$$E = \sin 2 \, \pi \, ft,$$

in the form of a series of samples

$$x_p = \sin 2 \, \pi \, fpT$$

of rank p inscribed in memory means, characterized in that the memory means comprise a read-only memory (1) containing n different values 1, 2 . . . n taken by the function sin 2 $\pi$ t at n successive instants
$$t_1 = \frac{1}{F}, \, t_2 = \frac{2}{F}, \, \ldots t_n = \frac{n}{F}, \, F = \frac{1}{T}$$

being the sampling frequency, a read/write memory (2) for storing each sample in the form of a triplet P, Q, S, P representing the absolute value sin 2 $\pi$ PT of the sample of rank p, Q and S defining the quadrant of a trigonometric circle containing the sample, the sample of rank p of the signal to be generated being obtained biunivocally from the sample of rank pf of the function sin 2 $\pi$ t contained in the read-only memory (1) and the samples of the read-only memory (1) being addressed by the numbers P of the read/write memory (2), the generator further comprising means (9, 11–15) for deducing from a triplet P, Q, S, indicative of the sample of instant pT, the triplet P', Q', S' indicative of the sample of instant (p + 1) T.

FIG.1

FIG.2

**FIG.3**